# EUROPEAN PATENT APPLICATION

(11) **EP 4 796 784 A1**
(43) Date of publication of application: **26.08.2026**
(21) Application number: 25213324.4
(22) Date of filing: 04.11.2025
(51) Int. Cl.: F03G 7/06

(54) **BIDIRECTIONAL ACTUATOR AND METHOD FOR MANUFACTURING THE SAME**

(30) Priority: 21.02.2025 KR 20250023130
(71) Applicant: Korea Advanced Institute of Science and Technology, Daejeon 34141 (KR)
(72) Inventor: KIM, Seong Su, 34141 Daejeon (KR); KANG, Dajeong, 34141 Daejeon (KR); PARK, Seong Yeon, 34141 Daejeon (KR); ADITYA, Yitro Samuel, 34141 Daejeon (KR)
(74) Representative: Manitz Finsterwald Patent- und Rechtsanwaltspartnerschaft mbB

(57) **Abstract**

The present disclosure relates to a bidirectional actuator having curvature in the width direction and a method for manufacturing the bidirectional actuator.

## Description

### BACKGROUND OF THE INVENTION

### (a) Field of the Invention

The present disclosure relates to a bidirectional actuator and a method for manufacturing the bidirectional actuator.

### (b) Description of the Related Art

Shape Memory Alloy (SMA) possesses the characteristic of remembering its predeformed shape by utilizing phase transformation between a high-temperature phase and a low-temperature phase within a specific temperature range. Accordingly, through proper temperature control, the metallic material can be restored to its original shape, generating thrust and driving force. Research and development on compact, high-output actuators using SMAs is being conducted in various industrial fields such as medical devices, robotics, and aerospace.

Meanwhile, shape memory polymers (SMPs) and shape memory polymer composites (SMPCs) exhibit the property that polymer materials are deformed above their glass transition temperature (Tg) due to temperature changes or specific stimuli, and return to their original shape when cooled or when the stimulus is removed. When electrically conductive fillers (such as carbon nanotubes, graphene, carbon black, etc.) are compounded with shape memory polymers, heat can be easily generated through selfheating (Joule Heating) by electric current, enabling the realization of shape memory polymer composites (SMPCs) that allow for lightweight, low-cost, and large-deformation actuation.

Shape memory alloy standalone actuators possess high energy density and excellent recoverability; however, they are relatively difficult to process, may have a limited operating temperature range, and can suffer from reduced actuation cycle life due to oxidation or fatigue at high temperatures. In addition, shape memory alloys by themselves can only bend in a single direction, and require separate springs or other components for restoration after actuation, resulting in a more complex composite structure.

Shape memory polymers and/or shape memory polymer composite standalone actuators are lightweight and capable of large deformations, but compared to shape memory alloys, they have lower recovery force and require a long recovery time. Thus, they have limitations in fields that require high driving force or precise bidirectional operation.

Accordingly, research on shape memory materials with bidirectional characteristics is being conducted. Shape memory materials with bidirectional characteristics can be largely categorized into liquid crystal elastomers (LCEs), semicrystalline networks (SCNs), interpenetrating polymer networks (IPNs), and two-way shape memory composites (2W-SMPCs). Among these, LCEs, SCNs, and IPNs have the advantage of a wide range of shape actuation, but their synthesis and manufacturing methods are complex, and their mechanical properties are very low, making it difficult to apply them to structures.

The previously studied bidirectional actuators, which hybridize shape memory alloys with shape memory polymers and/or shape memory polymer composites, have the drawback that, due to the significant mechanical property differences between the shape memory polymer and/or the shape memory polymer composite and the shape memory alloy, the shape recovery rate cannot reach equilibrium during heating and cooling, resulting in the bidirectional characteristics appearing only within a very narrow strain range depending on heating and cooling. To address this, research has been conducted in the direction of expanding the operating range by arranging multiple single actuators, each having bidirectional recovery rates within a narrow region; however, this approach has the disadvantages of having a complex system or the actuator size becoming unnecessarily large.

Therefore, there is a need for research into two-way actuators that can not only significantly improve the two-way actuation range but also enable bending deformation within seconds, achieve improved deployment speed and accuracy, and thereby greatly expand the range of applicable applications.

### SUMMARY OF THE INVENTION

According to one embodiment of the present disclosure, a bidirectional actuator capable of implementing an excellent bidirectional driving range and shape recovery speed is provided.

According to another embodiment of the present disclosure, a method for manufacturing the bidirectional actuator is provided.

### BRIEF DESCRIPTION OF THE DRAWINGS

FIG. 1 is a diagram showing the driving process of the bidirectional actuator according to one embodiment.
FIG. 2 is a diagram showing the stacked structure of part of the bidirectional actuator according to one embodiment.

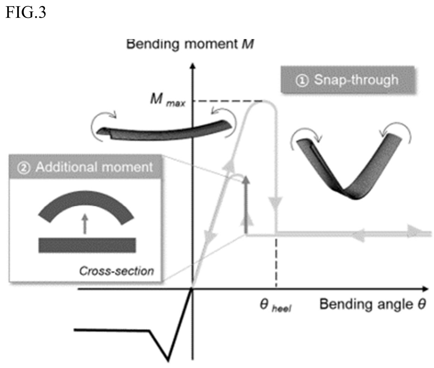

FIG. 3 is a graph showing the correlation between the bending angle and the bending moment during the shape deformation process of the bidirectional actuator according to one embodiment.
FIG. 4 is a graph showing the phase transformation temperature of the shape memory alloy used in the bidirectional actuator according to one embodiment.
FIG. 5 is a graph showing the temperature change of the wire heating system during the shape deformation process of the bidirectional actuator according to one embodiment.
FIG. 6 is a an infrared camera image showing the shape change during operation of the bidirectional actuator according to one embodiment.
FIG. 7 is a graph showing the glass transition temperature measured for Example 1 and Comparative Examples 2 to 5 in Experimental Example 3.
FIG. 8 is a graph of the elastic modulus measured for Example 1 and Comparative Examples 2 to 5 in Experimental Example 3.
FIG. 9 is a graph of the shape recovery ratio measured for Example 1 and Comparative Examples 2 to 5 in Experimental Example 3.
FIG. 10 is a graph of the shape recovery speed measured for Example 1 and Comparative Examples 2 to 5 in Experimental Example 3.
FIG. 11 is a graph of the shape recovery ratio measured for Example 1 and Comparative Example 1 in Experimental Example 4.
FIG. 12 is a graph of the shape recovery speed measured for Example 1 and Comparative Example 1 in Experimental Example 4.
FIG. 13 is a graph of the bending rigidity according to slit direction for Example 1 in Experimental Example 5.

### DETAILED DESCRIPTION OF THE EMBODIMENTS

According to one embodiment of the present disclosure, in order to solve the problem, there is provided a bidirectional actuator comprising: a metal layer comprising a shape memory alloy; an insulating layer formed on both sides of the metal layer; polymer layer formed on one surface of the insulating layer opposite to the surface where the insulating layer and metal layer are in contact, wherein the polymer layer comprises a shape memory polymer, and wherein the actuator has curvature in the width direction.

According to another embodiment of the present disclosure, there is provided a method for manufacturing a bidirectional actuator having curvature in the width direction, comprising the steps of: preparing a metal layer comprising a shape memory alloy; forming an insulating layer by laminating an insulating material on both sides of the metal layer; and forming a polymer layer on one surface of the insulating layer opposite to the surface where the insulating layer and metal layer are in contact using a shape memory polymer composition.

Hereinafter, the bidirectional actuator and the method for manufacturing the bidirectional actuator according to specific embodiments of the present disclosure will be explained in detail.

Unless explicitly stated otherwise in the present disclosure, technical terms are merely used to refer to specific embodiments and are not intended to limit the present invention.

Singular forms used in the present disclosure include plural forms as well, unless the context clearly indicates otherwise.

The term 'comprising' as used in in the present disclosure specifies the presence of particular features, regions, integers, steps, actions, elements, and/or components, but does not preclude the presence or addition of one or more other features, regions, integers, steps, actions, elements, components, and/or groups thereof.

Furthermore, terms including ordinals such as 'first' and 'second' as used herein are employed solely to distinguish one component from another, and are not limited by the ordinals themselves. For example, within the scope of the present invention, a first component may also be referred to as a second component, and likewise, a second component may also be referred to as a first component.

Hereinafter, the present disclosure will be described in further detail.

According to one embodiment of the present disclosure, there is provided a bidirectional actuator comprising: a metal layer comprising a shape memory alloy; an insulating layer formed on both sides of the metal layer; polymer layer formed on one surface of the insulating layer opposite to the surface where the insulating layer and metal layer are in contact, wherein the polymer layer comprises a shape memory polymer, and wherein the actuator has curvature in the width direction.

The present inventors have experimentally confirmed and completed the disclosure that, the bidirectional actuator of the present disclosure achieves the excellent shape recovery ability and shape recovery speed of a metal layer comprising a shape memory alloy and the excellent actuation range of a polymer layer comprising a shape memory polymer simultaneously by comprising a metal layer comprising a shape memory alloy and a polymer layer comprising a shape memory polymer.

In addition, the present inventors have experimentally confirmed and completed the invention that, since the bidirectional actuator of the present disclosure has curvature in the width direction, it induces a snap-through phenomenon at the initial stage of bending deformation during heating, thereby achieving a very fast deformation speed, and during cooling, by inducing the snap-through phenomenon in the latter stage of the deployment process, it is possible to reduce the actuation time and improve deployment accuracy and actuation range.

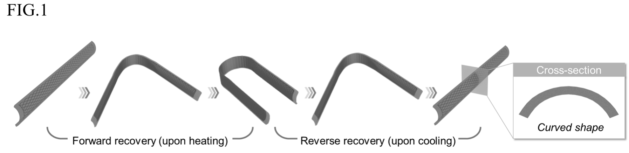

Specifically, FIG. 1 shows the shape recovery process that occurs during heating and cooling of the bidirectional actuator according to one embodiment of the present disclosure.

In the present disclosure, shape memory alloy may refer to a metal alloy that remembers and restores its original shape prior to deformation by undergoing a phase transformation between a high-temperature phase (austenite) and a low-temperature phase (martensite) in response to external stimuli such as heat, magnetic force, or mechanical load.

Specifically, in the bidirectional actuator of the present disclosure, the shape memory alloy undergoes a phase transformation from martensite to austenite when heated, and the temperature at which this phase transformation begins and completes are called the austenite transformation start temperature (Aₛ) and the austenite transformation finish temperature (A_{f}), respectively. In addition, upon cooling, the alloy reverts from austenite to martensite, and the temperature at which this phase transformation begins and completes are called the martensite transformation start temperature (Mₛ) and the martensite transformation finish temperature (M_{f}), respectively. These temperatures are located in a temperature range lower than Aₛ and A_{f}. The shape memory alloy, in the martensite state that appears upon cooling, has lower physical properties and may be easily deformed in shape; when it transforms to austenite, its mechanical properties increase and the deformed shape is restored.

In the present disclosure, a shape memory polymer may refer to a polymer that exhibits the characteristic of easily returning from a temporary shape to its permanent shape in response to external stimuli such as heat, light, electricity, magnetism, pH, enzymes, or ions.

Specifically, in the bidirectional actuator of the present disclosure, the shape memory polymer or shape memory polymer composite has high physical properties at low temperatures, and as it is heated and reaches the glass transition temperature (Tg), its physical properties decrease and it becomes easy to deform.

The bidirectional actuator according to one embodiment of the present disclosure undergoes bending deformation at temperatures equal to or higher than the austenite finish temperature (A_{f}) during heating, and undergoes unfolding deformation at temperatures equal to or lower than the martensite finish temperature (M_{f}) during cooling.

Specifically, as shown in Figure 1, when heated, the shape memory polymer or shape memory polymer composite reaches its glass transition temperature, resulting in a reduction of mechanical properties; the shape memory alloy undergoes a phase change to austenite at temperatures equal to or higher than the austenite finish temperature (A_{f}), thereby causing bending deformation, which in turn leads to forward shape recovery.

In contrast, during cooling, the shape memory alloy undergoes a phase transformation into martensite at temperatures below the martensite start temperature (Mₛ), resulting in reduced mechanical properties. The shape memory polymer or shape memory polymer composite returns to its permanent shape, undergoing deployment deformation, and as a result, reverse recovery occurs. Reverse recovery stops when the shape memory polymer or shape memory polymer composite is cooled below its glass transition temperature, and the deployment deformation also ceases.

As described above, the bidirectional actuator according to one embodiment of the present disclosure may have curvature in the width direction.

As the bidirectional actuator according to one embodiment of the present disclosure has curvature in the width direction, a snap-through phenomenon is induced, enabling excellent shape recovery speed to be achieved.

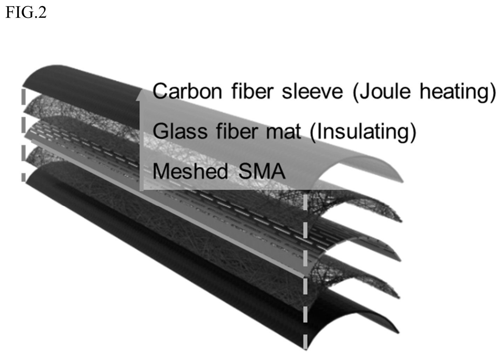

Specifically, as shown in FIG. 2, since the bidirectional actuator of the present disclosure has curvature in the width direction, during the initial stage of bending deformation of the bidirectional actuator, the curvature in the width direction unfolds, allowing subsequent deformation to propagate at a very high speed due to the snap-through effect. During the deployment deformation of the bidirectional actuator, the curvature in the width direction is restored in the later stage of deformation, and an additional moment enables excellent deployment speed and deployment accuracy to be achieved.

The bidirectional actuator according to one embodiment of the present disclosure may include a metal layer comprising a shape memory alloy.

As described above, the shape memory alloy exhibits lower mechanical properties and is easily deformable in the martensite state that appears upon cooling, and when it undergoes a phase change to austenite, its mechanical properties increase and the deformed shape is restored.

Specifically, the metal layer may include a mesh-type shape memory alloy comprising slits in the longitudinal direction.

By including a mesh-type shape memory alloy with slits in the longitudinal direction in the metal layer, the interfacial strength with the polymer layer may be improved and the finally manufactured bidirectional actuator exhibits lower bending rigidity in the width direction than in the longitudinal direction, thereby allowing curvature in the width direction.

The type of shape memory alloy of the metal layer is not particularly limited; for example, the shape memory alloy may include one or more types of shape memory alloys selected from the group consisting of copper-aluminum-nickel (Cu-Al-Ni), nickel-titanium (NiTi), iron-manganese-silicon (Fe-Mn-Si), and copper-zinc-aluminum (Cu-Zn-Al).

The thickness of the metal layer may be 0.25 mm or more and 0.75 mm or less.

Specifically, the thickness of the metal layer may be 0.25 mm or more, 0.3 mm or more, 0.4 mm or more, 0.45 mm or more, 0.75 mm or less, 0.7 mm or less, 0.6 mm or less, 0.5 mm or less, 0.25 mm or more and 0.75 mm or less, 0.25 mm or more and 0.7 mm or less, 0.25 mm or more and 0.6 mm or less, 0.25 mm or more and 0.5 mm or less, 0.3 mm or more and 0.75 mm or less, 0.3 mm or more and 0.7 mm or less, 0.3 mm or more and 0.6 mm or less, 0.3 mm or more and 0.5 mm or less, 0.4 mm or more and 0.75 mm or less, 0.4 mm or more and 0.7 mm or less, 0.4 mm or more and 0.6 mm or less, 0.4 mm or more and 0.5 mm or less, 0.45 mm or more and 0.75 mm or less, 0.45 mm or more and 0.7 mm or less, 0.45 mm or more and 0.6 mm or less, 0.45 mm or more and 0.5 mm or less.

If the thickness of the metal layer becomes excessively thin, the restoring force of the shape memory alloy may not be sufficient, so the entire actuator, which includes a polymer layer comprising the shape memory polymer, may not bend adequately. Conversely, if it becomes excessively thick, the process of bending and heat-treating the metal layer is required during the fabrication of a bidirectional actuator, but this process becomes difficult, causing potential problems in manufacturing.

The bidirectional actuator according to one embodiment of the present disclosure may include an insulating layer formed on both sides of the metal layer.

As the insulating layer is positioned between the metal layer and the polymer layer, electrical insulation between the metal layer and the polymer layer is possible, and at the same time, it serves as a reinforcing material, thereby improving the durability of the finally manufactured bidirectional actuator.

The insulating layer may include one or more insulating materials selected from the group consisting of polystyrene, polyimide, polyurethane, glass fiber, natural fiber, and Kevlar fiber.

The thickness of the insulating layer may be 0.01 mm or more and 0.15 mm or less.

Specifically, the thickness of the insulating layer may be 0.01 mm or more and 0.15 mm or less, or 0.01 mm or more and less than 0.15 mm.

If the thickness of the insulating layer becomes excessively thin, the insulation performance may not be sufficiently realized, and if it becomes excessively thick, the performance of the finally manufactured bidirectional actuator may be degraded.

The bidirectional actuator according to one embodiment of the present disclosure may include a polymer layer formed on one surface of the insulating layer opposite to the surface where the insulating layer and metal layer are in contact, wherein the polymer layer comprises a shape memory polymer

As described above, the shape memory polymer or shape memory polymer composite possesses high physical properties at low temperatures and, as it is heated and reaches the glass transition temperature (T_{g}), its physical properties decrease and it becomes easier to deform.

Specifically, the polymer layer may be heated by the Joule heating method.

The Joule heating method refers to a heating technique that generates heat by applying electric current, utilizing the phenomenon in which electrical energy is converted into thermal energy as current passes through a conductor or semiconductor.

As the polymer layer is heated by the Joule heating method, the bidirectional actuator may be uniformly heated across its entire area.

Although the method of heating the polymer layer by the Joule heating method is not particularly limited, for example, heating may be performed by connecting electrodes to both ends of the polymer layer.

The shape memory polymer may include at least one shape memory polymer selected from the group consisting of polyurethane, polyimide, epoxy resin, polyolefin, polystyrene, and polycarbonate.

The shape memory polymer may have a glass transition temperature that is at least 0.1 °C lower than the martensitic transformation start temperature (Ms) of the shape memory alloy.

Specifically, the shape memory polymer may have a glass transition temperature that is 0.1°C or more, 0.1°C or more and 30°C or less, 1°C or more and 30°C or less, 5°C or more and 30°C or less, 0.1°C or more and 25°C or less, 1°C or more and 25°C or less, or 5°C or more and 25°C or less lower than the martensitic transformation start temperature (Ms) of the shape memory alloy.

As the bidirectional actuator of the one embodiment according to the present disclosure is cooled below the martensite finish temperature (Ms) of the shape memory alloy, the shape memory alloy undergoes a phase transformation into martensite, which may reduce its mechanical properties.

At this time, if the temperature of the bidirectional actuator satisfies the condition of being higher than or equal to the glass transition temperature of the shape memory polymer and lower than or equal to the martensite start temperature (Ms) of the shape memory alloy, the shape memory alloy undergoes a phase transformation into martensite, resulting in a decrease in its mechanical properties, and at the same time, the shape memory polymer is in a state where deformation is easy. Due to the force that attempts to return to the permanent shape until it is cooled below the glass transition temperature of the shape memory polymer or shape memory polymer composite, deployment deformation occurs and reverse recovery may proceed.

Specifically, the polymer layer may include a curing agent and an electrically conductive reinforcing material.

As the polymer layer includes the electrically conductive reinforcing material, Joule heating by the electrically conductive reinforcing material may be implemented.

Specifically, the electrically conductive reinforcing material included in the polymer layer may include one or more electrically conductive reinforcing materials selected from the group consisting of carbon fiber, carbon black, graphene, carbon nanotubes, and carbon balls.

The curing agent may be appropriately selected depending on the type of shape memory polymer, and for example, the curing agent may include one or more curing agents selected from the group consisting of amine compounds such as 4,4'-diaminodiphenylmethane (DDM), 4,4'-methylenedianiline (MDA), triethylenetetramine (TETA); acid anhydride compounds such as phthalic anhydride, methyl nadic anhydride, hexahydrophthalic anhydride (HHPA); isocyanate compounds such as methylene diphenyl diisocyanate (MDI), toluene diisocyanate (TDI), hexamethylene diisocyanate (HDI), isophorone diisocyanate (IPDI); and divalent alcohol compounds such as 1,4-butanediol (BDO) and ethylene glycol (ED).

Meanwhile, the polymer layer may have an equivalent ratio calculated by the following Mathematical Formula 1, which is greater than 0.5 and less than 0.7. 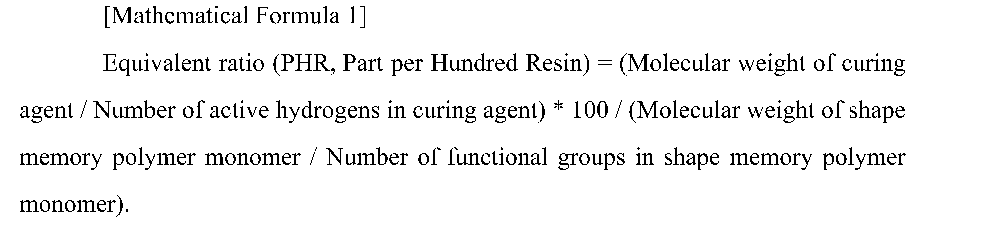 Equivalent ratio (PHR, Part per Hundred Resin) = (Molecular weight of curing agent / Number of active hydrogens in curing agent) * 100 / (Molecular weight of shape memory polymer monomer / Number of functional groups in shape memory polymer monomer).

Specifically, the equivalent ratio calculated by Mathematical Formula 1 may be greater than 0.5, 0.6 or more, 0.61 or more, 0.63 or more, 0.65 or more, less than 0.7, 0.699 or less, 0.69 or less, 0.68 or less, 0.67 or less, 0.66 or less, greater than 0.5 and less than 0.7, greater than 0.5 and 0.699 or less, greater than 0.5 and 0.69 or less, greater than 0.5 and 0.68 or less, greater than 0.5 and 0.67 or less, greater than 0.5 and 0.66 or less, 0.6 or more and less than 0.7, 0.6 or more and 0.699 or less, 0.6 or more and 0.69 or less, 0.6 or more and 0.68 or less, 0.6 or more and 0.67 or less, 0.6 or more and 0.66 or less, 0.61 or more and less than 0.7, 0.61 or more and 0.699 or less, 0.61 or more and 0.69 or less, 0.61 or more and 0.68 or less, 0.61 or more and 0.67 or less, 0.61 or more and 0.66 or less, 0.63 or more and less than 0.7, 0.63 or more and 0.699 or less, 0.63 or more and 0.69 or less, 0.63 or more and 0.68 or less, 0.63 or more and 0.67 or less, 0.63 or more and 0.66 or less, 0.65 or more and less than 0.7, 0.65 or more and 0.699 or less, 0.65 or more and 0.69 or less, 0.65 or more and 0.68 or less, 0.65 or more and 0.67 or less, 0.65 or more and 0.66 or less.

As the equivalent ratio of the polymer layer calculated by Mathematical Formula 1 satisfies the specified range, the degree of crosslinking of the shape memory polymer chains is appropriately controlled, thereby enabling the implementation of an excellent reverse shape recovery rate.

If the equivalent ratio of the polymer layer calculated by Mathematical Formula 1 becomes excessively small, recovery becomes difficult due to deterioration of the mechanical properties of the shape memory polymer. Conversely, if the equivalent ratio becomes excessively large, the glass transition temperature (Tg) of the shape memory polymer exceeds the martensitic transformation start temperature (Ms), causing the movement of the shape memory polymer chains to stop before the extension deformation occurs during cooling, which may significantly reduce the reverse shape recovery rate.

The thickness of the polymer layer may be 0.1 mm or more and 0.8 mm or less.

Specifically, the thickness of the polymer layer may be 0.1 mm or more and 0.8 mm or less, or 0.1 mm or more and 0.75 mm or less.

If the thickness of the polymer layer becomes excessively thin, the driving force of the polymer layer during the reverse shape recovery process may be reduced, making proper recovery difficult. Conversely, if the thickness becomes excessively thick, damage may occur due to excessive deformation during the shape transformation process.

According to another embodiment of the present disclosure, there is provided a method for manufacturing a bidirectional actuator having curvature in the width direction, comprising the steps of: preparing a metal layer comprising a shape memory alloy; forming an insulating layer by laminating an insulating material on both sides of the metal layer; and forming a polymer layer on one surface of the insulating layer opposite to the surface where the insulating layer and metal layer are in contact using a shape memory polymer composition.

The descriptions of the shape memory alloy, metal layer, insulating layer, shape memory polymer, and polymer layer include all the aforementioned contents.

As described above, in the manufacturing method of the bidirectional actuator according to one embodiment, since both a metal layer containing a shape memory alloy and a polymer layer comprising a shape memory polymer are simultaneously included, it is possible to simultaneously implement the excellent shape recovery force and shape recovery speed of the metal layer containing the shape memory alloy, and the excellent driving range of the polymer layer containing the shape memory polymer.

In addition, since the bidirectional actuator manufactured according to the manufacturing method of one embodiment has curvature in the width direction, it induces a snap-through phenomenon at the initial stage of bending deformation during heating, thereby achieving a very fast deformation speed, and reduces the actuation time through a snap-through phenomenon at the final stage of deployment during cooling, thus improving deployment accuracy and actuation range.

Specifically, the step of preparing a metal layer comprising a shape memory alloy may include fixing the shape memory alloy inside a cylindrical mold and performing heat treatment at a temperature of 500°C or less for a period of 10 minutes or more and 1 hour or less to prepare a metal layer having a permanent bent shape.

More specifically, in the step of include fixing the shape memory alloy inside a cylindrical mold and performing heat treatment at a temperature of 500°C or less for a period of 10 minutes or more and 1 hour or less to prepare a metal layer having a permanent bent shape, the shape memory alloy may include a mesh-type shape memory alloy comprising slits in the longitudinal direction.

That is, the step of preparing a metal layer comprising a shape memory alloy may include may include fixing the mesh-type shape memory alloy comprising slits in the longitudinal direction inside a cylindrical mold and performing heat treatment at a temperature of 500°C or less for a period of 10 minutes or more and 1 hour or less to prepare a metal layer having a permanent bent shape.

By including a mesh-type shape memory alloy with slits in the longitudinal direction in the metal layer, the interfacial strength with the polymer layer may be improved and the finally manufactured bidirectional actuator exhibits lower bending rigidity in the width direction than in the longitudinal direction, thereby allowing curvature in the width direction.

The type of shape memory alloy of the metal layer is not particularly limited; for example, the shape memory alloy may include one or more types of shape memory alloys selected from the group consisting of copper-aluminum-nickel (Cu-Al-Ni), nickel-titanium (NiTi), iron-manganese-silicon (Fe-Mn-Si), and copper-zinc-aluminum (Cu-Zn-Al).

The thickness of the metal layer may be 0.25 mm or more and 0.75 mm or less.

Specifically, the thickness of the metal layer may be 0.25 mm or more, 0.3 mm or more, 0.4 mm or more, 0.45 mm or more, 0.75 mm or less, 0.7 mm or less, 0.6 mm or less, 0.5 mm or less, 0.25 mm or more and 0.75 mm or less, 0.25 mm or more and 0.7 mm or less, 0.25 mm or more and 0.6 mm or less, 0.25 mm or more and 0.5 mm or less, 0.3 mm or more and 0.75 mm or less, 0.3 mm or more and 0.7 mm or less, 0.3 mm or more and 0.6 mm or less, 0.3 mm or more and 0.5 mm or less, 0.4 mm or more and 0.75 mm or less, 0.4 mm or more and 0.7 mm or less, 0.4 mm or more and 0.6 mm or less, 0.4 mm or more and 0.5 mm or less, 0.45 mm or more and 0.75 mm or less, 0.45 mm or more and 0.7 mm or less, 0.45 mm or more and 0.6 mm or less, 0.45 mm or more and 0.5 mm or less.

If the thickness of the metal layer becomes excessively thin, the restoring force of the shape memory alloy may not be sufficient, so the entire actuator, which includes a polymer layer comprising the shape memory polymer, may not bend adequately. Conversely, if it becomes excessively thick, the process of bending and heat-treating the metal layer is required during the fabrication of a bidirectional actuator, but this process becomes difficult, causing potential problems in manufacturing.

According to another embodiment of the present disclosure, the method for manufacturing a bidirectional actuator may comprise a step of forming an insulating layer by laminating an insulating material on both sides of the metal layer after the step of preparing a metal layer comprising a shape memory alloy.

Specifically, the step of forming an insulating layer by laminating an insulating material on both sides of the metal layer may be performed after the step of preparing a metal layer comprising a shape memory and the step of unfolding the metal layer at a temperature below the martensite transformation finish temperature (Mf).

The insulating layer may include one or more insulating materials selected from the group consisting of polystyrene, polyimide, polyurethane, glass fiber, natural fiber, and Kevlar fiber.

The thickness of the insulating layer may be 0.01 mm or more and 0.15 mm or less.

Specifically, the thickness of the insulating layer may be 0.01 mm or more and 0.15 mm or less, or 0.01 mm or more and less than 0.15 mm.

If the thickness of the insulating layer becomes excessively thin, the insulation performance may not be sufficiently realized, and if it becomes excessively thick, the performance of the finally manufactured bidirectional actuator may be degraded.

According to another embodiment of the present disclosure, the method for manufacturing a bidirectional actuator may comprise a step of forming a polymer layer on one surface of the insulating layer opposite to the surface where the insulating layer and metal layer are in contact using a shape memory polymer composition after the step of forming an insulating layer by laminating an insulating material on both sides of the metal layer.

In the step of forming a polymer layer on one surface of the insulating layer opposite to the surface where the insulating layer and metal layer are in contact using a shape memory polymer composition, the shape memory polymer composition may include at least one shape memory polymer selected from the group consisting of polyurethane, polyimide, epoxy resin, polyolefin, polystyrene, and polycarbonate.

Specifically, the step of forming a polymer layer on one surface of the insulating layer opposite to the surface where the insulating layer and metal layer are in contact using a shape memory polymer composition may include the step of laminating an electrically conductive reinforcing material on the surface of the insulating layer opposite to the surface where the insulating layer and the metal layer are in contact; and the step of fixing the laminate of the metal layer, insulating layer, and conductive reinforcing material inside a mold having curvature in the width direction and impregnating it with the shape memory polymer composition.

Since the step of laminating an electrically conductive reinforcing material on the surface of the insulating layer opposite to the surface where the insulating layer and the metal layer are in contact is included, Joule heating by the electrically conductive reinforcing material may be implemented in the finally manufactured bidirectional actuator.

Specifically, the electrically conductive reinforcing material may include one or more electrically conductive reinforcing materials selected from the group consisting of carbon fiber, carbon black, graphene, carbon nanotube, and carbon sphere.

In addition, in the step of forming a polymer layer on one surface of the insulating layer opposite to the surface where the insulating layer and metal layer are in contact using a shape memory polymer composition, the shape memory polymer composition may further include a curing agent, in addition to at least one type of shape memory polymer selected from the group consisting of polyurethane, polyimide, epoxy resin, polyolefin, polystyrene, and polycarbonate.

The curing agent may be appropriately selected according to the type of shape memory polymer, and examples include amine compounds such as 4,4'-diaminodiphenylmethane (DDM), 4,4'-methylenedianiline (MDA), and triethylenetetramine (TETA); acid anhydride compounds such as phthalic anhydride, methyl nadic anhydride, and hexahydrophthalic anhydride (HHPA); isocyanate compounds such as methylene diphenyl diisocyanate (MDI), toluene diisocyanate (TDI), hexamethylene diisocyanate (HDI), and isophorone diisocyanate (IPDI); and at least one curing agent selected from the group consisting of divalent alcohol compounds such as 1,4-butanediol (BDO) and ethylene glycol (ED).

The shape memory polymer composition may include a shape memory polymer and a curing agent, and the equivalent ratio calculated by the following Mathematical Formula 1 may be more than 0.5 and less than 0.7. 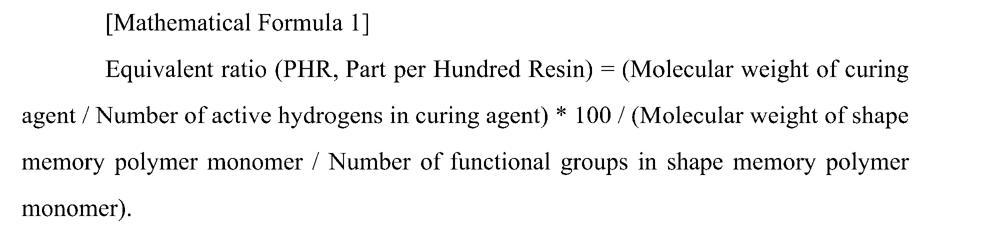 Equivalent ratio (PHR, Part per Hundred Resin) = (Molecular weight of curing agent / Number of active hydrogens in curing agent) * 100 / (Molecular weight of shape memory polymer monomer / Number of functional groups in shape memory polymer monomer).

Specifically, the equivalent ratio calculated by Mathematical Formula 1 may be greater than 0.5, 0.6 or more, 0.61 or more, 0.63 or more, 0.65 or more, less than 0.7, 0.699 or less, 0.69 or less, 0.68 or less, 0.67 or less, 0.66 or less, greater than 0.5 and less than 0.7, greater than 0.5 and 0.699 or less, greater than 0.5 and 0.69 or less, greater than 0.5 and 0.68 or less, greater than 0.5 and 0.67 or less, greater than 0.5 and 0.66 or less, 0.6 or more and less than 0.7, 0.6 or more and 0.699 or less, 0.6 or more and 0.69 or less, 0.6 or more and 0.68 or less, 0.6 or more and 0.67 or less, 0.6 or more and 0.66 or less, 0.61 or more and less than 0.7, 0.61 or more and 0.699 or less, 0.61 or more and 0.69 or less, 0.61 or more and 0.68 or less, 0.61 or more and 0.67 or less, 0.61 or more and 0.66 or less, 0.63 or more and less than 0.7, 0.63 or more and 0.699 or less, 0.63 or more and 0.69 or less, 0.63 or more and 0.68 or less, 0.63 or more and 0.67 or less, 0.63 or more and 0.66 or less, 0.65 or more and less than 0.7, 0.65 or more and 0.699 or less, 0.65 or more and 0.69 or less, 0.65 or more and 0.68 or less, 0.65 or more and 0.67 or less, 0.65 or more and 0.66 or less.

As the equivalent ratio of the polymer layer calculated by Mathematical Formula 1 satisfies the specified range, the degree of crosslinking of the shape memory polymer chains is appropriately controlled, thereby enabling the implementation of an excellent reverse shape recovery rate.

If the equivalent ratio of the polymer layer calculated by Mathematical Formula 1 becomes excessively small, recovery becomes difficult due to deterioration of the mechanical properties of the shape memory polymer. Conversely, if the equivalent ratio becomes excessively large, the glass transition temperature (Tg) of the shape memory polymer exceeds the martensitic transformation start temperature (Ms), causing the movement of the shape memory polymer chains to stop before the extension deformation occurs during cooling, which may significantly reduce the reverse shape recovery rate.

The thickness of the polymer layer may be 0.1 mm or more and 0.8 mm or less.

Specifically, the thickness of the polymer layer may be 0.1 mm or more and 0.8 mm or less, or 0.1 mm or more and 0.75 mm or less.

If the thickness of the polymer layer becomes excessively thin, the driving force of the polymer layer during the reverse shape recovery process may be reduced, making proper recovery difficult. Conversely, if the thickness becomes excessively thick, damage may occur due to excessive deformation during the shape transformation process.

Hereinafter, the actions and effects of the disclosure will be explained in detail through specific examples. However, these examples are presented only as the illustrations of the invention, and the scope of the right of the invention is not limited thereby.

### < Example 1>

### 1) Manufacture of the Metal Layer

A plate-shaped shape memory alloy (NiTi, composition (in atomic %): 40% ~ 50% Ni and 50% ~ 60% Ti, austenite transformation finish temperature (A_{f}): 60°C to 80°C) with a thickness of 0.5 mm was processed by a laser machining method to create slits (length of slits: 8~10 mm) in the longitudinal direction, thereby fabricating it into a mesh form.

The mesh-shaped plate-shaped shape memory alloy was placed into a cylindrical metal mold with a radius of 20~25 mm and then heated in a furnace at 500°C for one hour, followed by rapid cooling in distilled water (3°C), thereby producing a mesh-shaped shape memory alloy with a permanent curved form.

The mesh-shaped shape memory alloy with a permanent curved form was subjected to a shape memory process to be unfolded into a straight form at room temperature, thus manufacturing the metal layer (thickness: 0.5 mm).

### 2) Preparation of Shape Memory Polymer Composition

In the atmosphere, 15 g of a liquid curing agent (4,4'-Diaminodiphenylmethane, DDM), preheated at 120°C for 10 minutes, was added to 100 g of shape memory polymer (Bisphenol A, YD-114, Kukdo Chemical) in a stirrer and stirred at room temperature for 30 minutes. At this time, the equivalent ratio between the shape memory polymer and the curing agent, calculated by the following formula, is 0.6, and the glass transition temperature is 38.4°C. 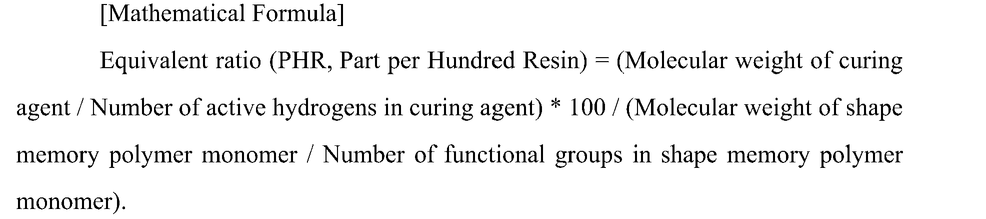 Equivalent ratio (PHR, Part per Hundred Resin) = (Molecular weight of curing agent / Number of active hydrogens in curing agent) * 100 / (Molecular weight of shape memory polymer monomer / Number of functional groups in shape memory polymer monomer).

### 3) Manufacture of Bidirectional Actuator

An insulating layer (glass fiber surface mat, 0.15 mm) and a reinforcing material (carbon fiber, 3K woven) were symmetrically laminated on the upper and lower surfaces of the metal layer, and the laminate was placed on a metal mold having curvature in the width direction.

100 ml of the shape memory polymer composition was poured onto the metal mold, and to ensure impregnation and removal of air bubbles, the assembly was kept under vacuum at 60°C for 60 minutes in a vacuum oven.

Subsequently, using a hot press process, curing was performed at 120°C and 1.5 Bar for 150 minutes, and after cooling to room temperature, a polymer layer (thickness: 0.75 mm) was formed on the upper and lower surfaces of the laminate.

The final manufactured bidirectional actuator (thickness: 2 mm) was separated from the metal mold.

### <Comparative Example 1>

A bidirectional actuator was manufactured in the same manner as in Example 1, except that a plate-shaped mold without curvature was used instead of a metal mold having curvature in the width direction during the manufacture of the bidirectional actuator.

### <Comparative Example 2>

A bidirectional actuator was manufactured in the same manner as in Example 1, except that 100 g of bisphenol A diglycidyl ether (200 g/eq) and 12.5 g of curing agent (4,4'-Diaminodiphenylmethane, DDM) were added during the preparation of the shape memory polymer composition, and the equivalent ratio according to the by the following formula was adjusted to 0.5. 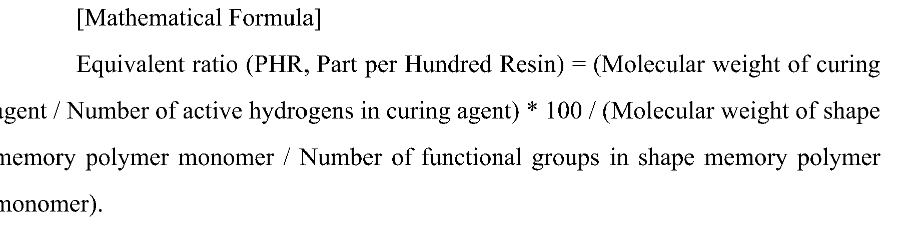 Equivalent ratio (PHR, Part per Hundred Resin) = (Molecular weight of curing agent / Number of active hydrogens in curing agent) * 100 / (Molecular weight of shape memory polymer monomer / Number of functional groups in shape memory polymer monomer).

### <Comparative Example 3>

A bidirectional actuator was manufactured in the same manner as in Example 1, except that 100 g of bisphenol A diglycidyl ether and 13.75 g of curing agent (4,4'-Diaminodiphenylmethane, DDM) were added during the preparation of the shape memory polymer composition, and the equivalent ratio according to the above Formula was adjusted to 0.55.

### <Comparative Example 4>

A bidirectional actuator was manufactured in the same manner as in Example 1, except that 100 g of bisphenol A diglycidyl ether and 15 g of curing agent (4,4'-Diaminodiphenylmethane, DDM) were added during the preparation of the shape memory polymer composition, and the equivalent ratio according to the above Formula was adjusted to 0.6.

### <Comparative Example 5>

A bidirectional actuator was manufactured in the same manner as in Example 1, except that 100 g of bisphenol A diglycidyl ether and 17.5 g of curing agent (4,4'-Diaminodiphenylmethane, DDM) were added during the preparation of the shape memory polymer composition, and the equivalent ratio according to the above Formula was adjusted to 0.7.

### <Experimental Example 1: Measurement of Phase Transformation Temperature of Shape Memory Alloy>

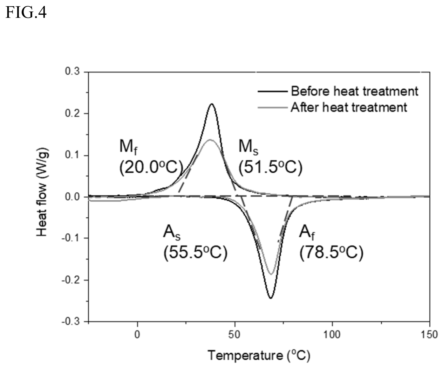

The phase transformation temperatures of martensite and austenite were measured for the metal layer used in Example 1 above by using a differential scanning calorimeter, and the results are shown in Figure 4.

As shown in Figure 4, the shape memory alloy used in Example 1 had a martensite transformation start temperature (Mₛ) of 51.5°C, a martensite transformation finish temperature (M_{f}) of 20.0°C, an austenite transformation start temperature (Aₛ) of 55.5°C, and an austenite transformation finish temperature (A_{f}) of 78.5°C.

### <Experimental Example 2: Changes in the operating temperature of the Joule heating system>

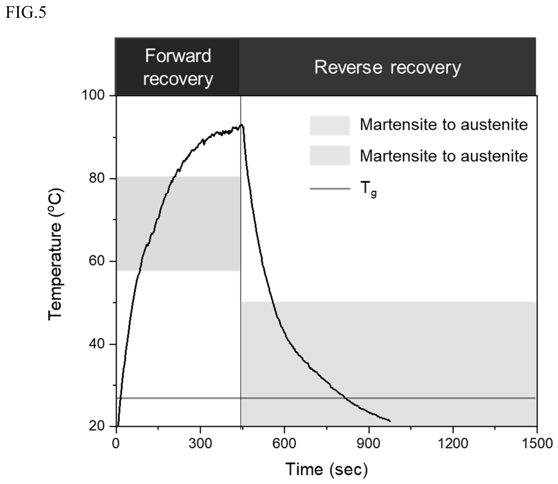

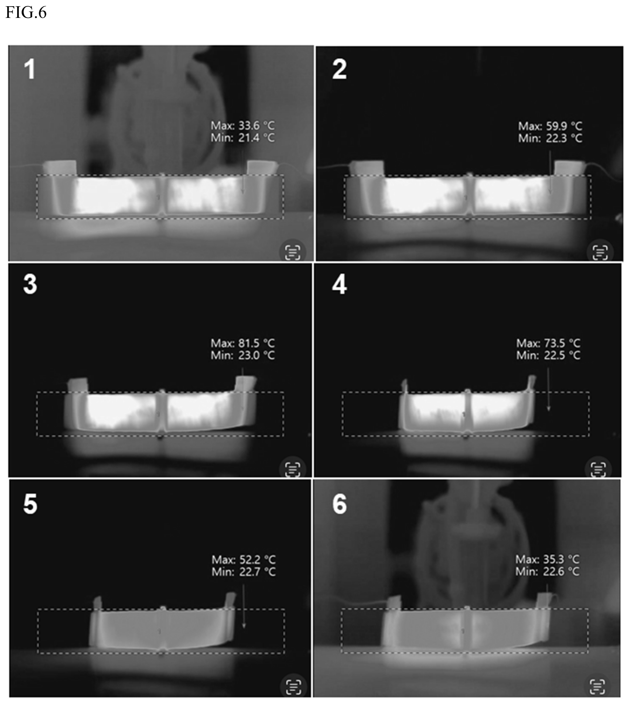

For the bidirectional actuator manufactured in Example 1 above, electrodes were fabricated at both ends of the carbon fiber resistor, and heating was performed by applying a current through a DC power supply from 20°C to 90°C. The power supply for the Joule heating system was then cut off to allow cooling to room temperature. The graph showing the temperature change of the Joule heating system at this time is shown in Figure 5, and photographs of the bidirectional actuator taken with an infrared camera are shown in Figure 6.

As shown in Figure 5, forward shape recovery bending deformation occurred during heating. During cooling, reverse shape recovery started in the temperature range between the martensite transformation start temperature (Mₛ) and the martensite transformation finish temperature (M_{f}), and it was confirmed that this ended when the glass transition temperature (28°C) of the shape memory polymer was reached.

In addition, in Figure 6, numbers 1 to 4 are images taken with an infrared camera showing the shape change during heating, and numbers 4 to 6 are images taken with an infrared camera showing the shape change during cooling. As shown in Figure 6, it was confirmed that the use of the Joule heating system enabled uniform heating over the entire area of the bidirectional actuator.

### <Experimental Example 3: Reverse shape recovery rate and reverse shape recovery speed according to the equivalence ratio >

As described in Example 1 and Comparative Examples 2-5 above, a shape memory polymer solution was prepared by adjusting the equivalent ratio calculated by the above mathematical formula according to the amount of curing agent added.

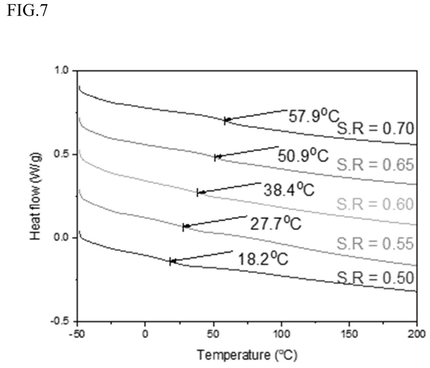

For the shape memory polymer thus produced, 10 mg of the cured shape memory polymer was placed in a differential scanning calorimeter, heated from -50°C to 200°C at a rate of 5°C per minute, and the glass transition temperature was measured based on the peak where exothermic reaction occurred. The results are shown in Figure 7.

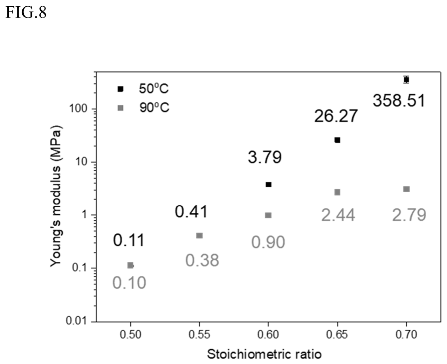

In addition, according to ASTM D638, the shape memory polymer specimen was prepared, mounted on a universal testing machine, and the elastic modulus at a specific temperature was measured through a heating chamber. The results are shown in Figure 8.

As shown in Figures 7 and 8, it was confirmed that as the equivalent ratio decreases, both the glass transition temperature and the elastic modulus increase.

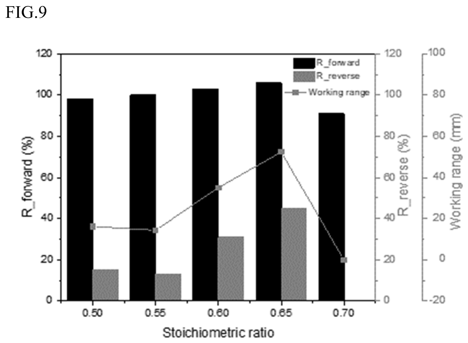

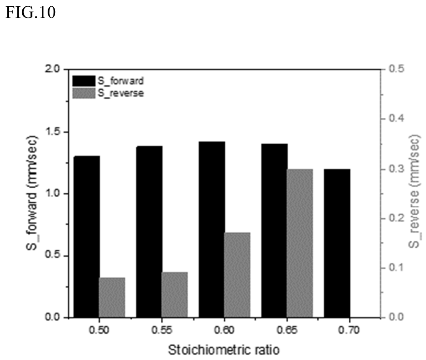

Furthermore, for the final bidirectional actuator manufactured according to Example 1 and Comparative Examples 2-5, the change in length of both ends of the bidirectional actuator was measured using Digital Image Correlation. At this time, the speed at which the length changed was measured as the shape recovery speed, and the change in length relative to the total possible movement distance was measured as the shape recovery ratio. The results are shown in Figures 9 and 10, respectively.

Specifically, the shape recovery ratio was calculated as follows. 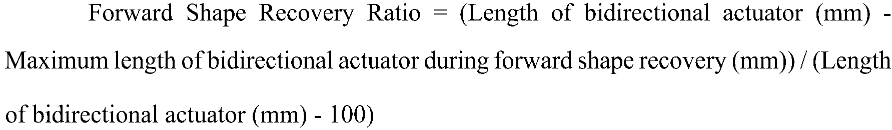 Forward Shape Recovery Ratio = (Length of bidirectional actuator (mm) - Maximum length of bidirectional actuator during forward shape recovery (mm)) / (Length of bidirectional actuator (mm) - 100) 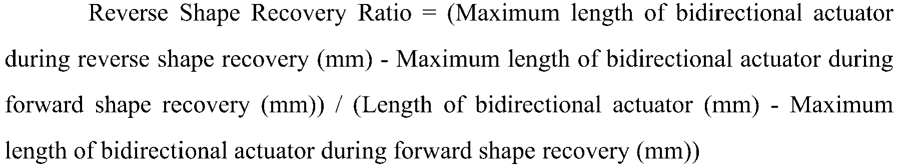 Reverse Shape Recovery Ratio = (Maximum length of bidirectional actuator during reverse shape recovery (mm) - Maximum length of bidirectional actuator during forward shape recovery (mm)) / (Length of bidirectional actuator (mm) - Maximum length of bidirectional actuator during forward shape recovery (mm))

Specifically, the shape recovery speed was calculated as follows. 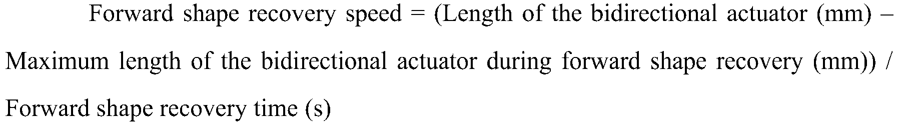 Forward shape recovery speed = (Length of the bidirectional actuator (mm) - Maximum length of the bidirectional actuator during forward shape recovery (mm)) / Forward shape recovery time (s) 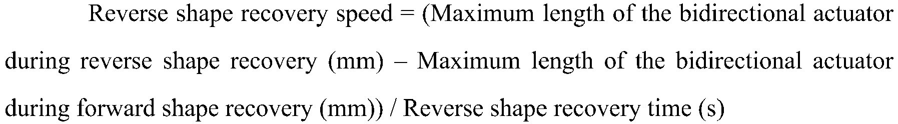 Reverse shape recovery speed = (Maximum length of the bidirectional actuator during reverse shape recovery (mm) - Maximum length of the bidirectional actuator during forward shape recovery (mm)) / Reverse shape recovery time (s)

As shown in FIG.9, the most outstanding reverse shape recovery rate was achieved at an equivalence ratio of 0.65. When the equivalence ratio becomes excessively high, it was confirmed that the glass transition temperature of the shape memory polymer becomes higher than the martensitic transformation start temperature (Mₛ), so that the movement of the polymer chains stops before the developed deformation occurs during cooling, and the reverse shape recovery rate converges to nearly zero.

Furthermore, as shown in Figure 10, it can be seen that the reverse shape recovery speed also exhibits its highest value at 0.65 due to the increase in rigidity with increasing equivalence ratio.

### <Experimental Example 4: Difference in restoration depending on the presence or absence of widthwise curvature in a bidirectional actuator>

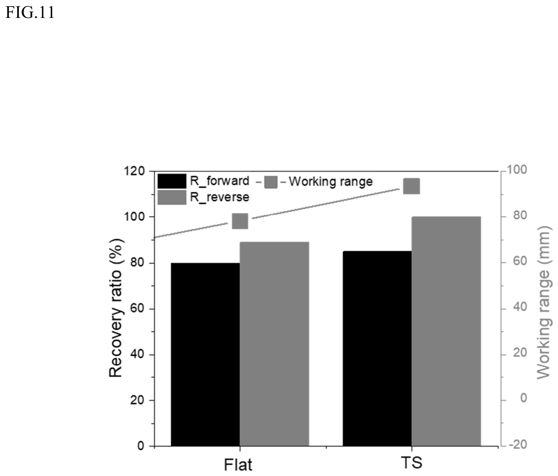

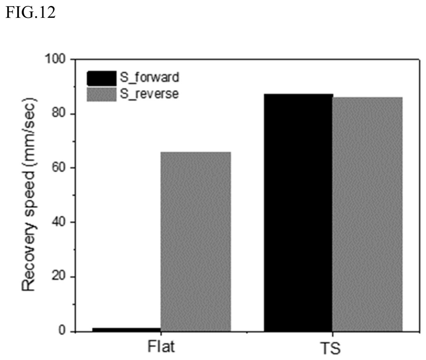

For the bidirectional actuators manufactured in Example 1 and Comparative Example 1, the change in length at both ends of the bidirectional actuator was measured using Digital Image Correlation, and at this time, the rate of change in length was measured as the shape recovery rate, and the change in length relative to the total possible movement distance was measured as the shape recovery ratio. The results are shown in Figures 11 and 12, respectively.

Specifically, the shape recovery ratio was calculated as follows. 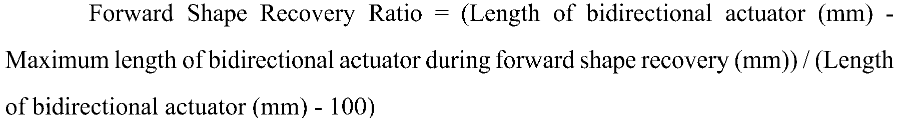 Forward Shape Recovery Ratio = (Length of bidirectional actuator (mm) - Maximum length of bidirectional actuator during forward shape recovery (mm)) / (Length of bidirectional actuator (mm) - 100) 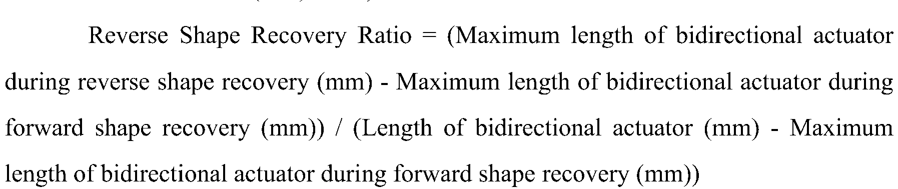 Reverse Shape Recovery Ratio = (Maximum length of bidirectional actuator during reverse shape recovery (mm) - Maximum length of bidirectional actuator during forward shape recovery (mm)) / (Length of bidirectional actuator (mm) - Maximum length of bidirectional actuator during forward shape recovery (mm))

Specifically, the shape recovery speed was calculated as follows. 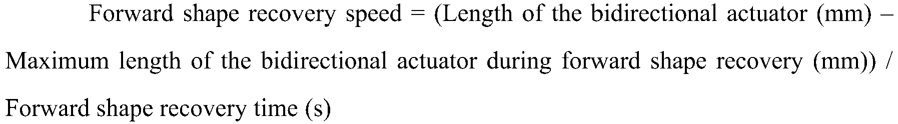 Forward shape recovery speed = (Length of the bidirectional actuator (mm) - Maximum length of the bidirectional actuator during forward shape recovery (mm)) / Forward shape recovery time (s) 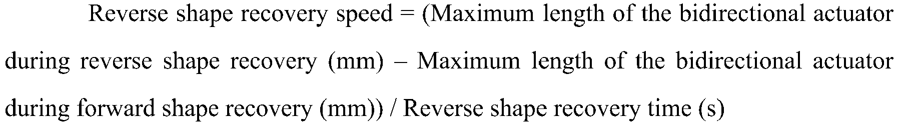 Reverse shape recovery speed = (Maximum length of the bidirectional actuator during reverse shape recovery (mm) - Maximum length of the bidirectional actuator during forward shape recovery (mm)) / Reverse shape recovery time (s)

As shown in Figures 11 and 12, it was confirmed that the bidirectional actuator of Example 1 exhibits remarkably superior reverse shape recovery rate and reverse shape recovery speed by utilizing the snap-through effect as it has curvature in the width direction.

### <Experimental 5: Measurement of bending stiffness according to slit direction>

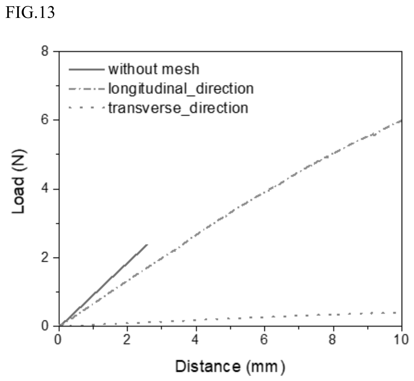

The bending stiffness according to the direction of the slit was measured for the bidirectional actuator manufactured in Example 1 in accordance with ASTM D7264, and the results are shown in Figure 13.

Specifically, the bidirectional actuator that includes a metal layer without a formed slit (without mesh) used a plate-shaped shape memory alloy (NiTi, composition: 40 wt% ~ 50 wt% Ni and 50 wt% ~ 60 wt% Ti, austenite transformation finish temperature (A_{f}): 60°C to 80°C) with a thickness of 0.5 mm, length of 125 mm, and width of 20 mm as the metal layer.

For the bidirectional actuator (Longitudinal direction) with slits formed in the length direction, slits were formed in the longitudinal direction using a laser processing method so that the slit length was 8 mm, the longitudinal spacing between slits was 2 mm, and the lateral spacing between slits was 1 mm, using a plate-shaped shape memory alloy (NiTi, composition: 40 wt% ~ 50 wt% Ni and 50 wt% ~ 60 wt% Ti, austenite transformation finish temperature (Af): 60°C to 80°C) with a thickness of 0.5 mm, length of 125 mm, and width of 20 mm as the metal layer, thereby fabricating it in the form of a mesh. At this time, the finally manufactured bidirectional actuator formed curvature in the width direction.

A bidirectional actuator in which slits are formed in the width direction (Transverse direction) is manufactured in a mesh form by using a laser machining method to form slits in the width direction on a plate-shaped shape memory alloy (NiTi, composition: 40 wt% ~ 50 wt% Ni and 50 wt% ~ 60 wt% Ti, austenite finish temperature (Af): 60°C to 80°C) with a metal layer of 0.5 mm thickness, 125 mm length, and 20 mm width, so that the slit length is 8 mm, the slit-to-slit interval in the width direction is 2 mm, and the slit-to-slit interval in the length direction is 1 mm. At this time, the finally manufactured bidirectional actuator was formed with a curvature in the length direction.

As shown in FIG. 13, it was specifically confirmed that the bidirectional actuator including a metal layer having slits in the length direction exhibits superior bending rigidity compared to the bidirectional actuator including a metal layer having slits in the width direction.

## Claims

1. A bidirectional actuator comprising:
a metal layer comprising a shape memory alloy;
an insulating layer formed on both sides of the metal layer;
polymer layer formed on one surface of the insulating layer opposite to the surface where the insulating layer and metal layer are in contact,
wherein the polymer layer comprises a shape memory polymer, and
wherein the actuator has curvature in the width direction.

2. The bidirectional actuator according to claim 1,
wherein the metal layer comprises a mesh-type shape memory alloy comprising slits in the longitudinal direction.

3. The bidirectional actuator according to claim 1,
wherein the shape memory alloy comprises one or more types of shape memory alloys selected from the group consisting of copper-aluminum-nickel (Cu-Al-Ni), nickel-titanium (NiTi), iron-manganese-silicon (Fe-Mn-Si), and copper-zinc-aluminum (Cu-Zn-Al).

4. The bidirectional actuator according to claim 1,
wherein the polymer layer is heated by the Joule heating method.

5. The bidirectional actuator according to claim 1,
wherein the shape memory polymer comprises at least one shape memory polymer selected from the group consisting of polyurethane, polyimide, epoxy resin, polyolefin, polystyrene, and polycarbonate.

6. The bidirectional actuator according to claim 1,
wherein the shape memory polymer have a glass transition temperature that is at least 0.1°C lower than the martensitic transformation start temperature (Ms) of the shape memory alloy.

7. The bidirectional actuator according to claim 1,
wherein the polymer layer comprises a curing agent and an electrically conductive reinforcing material.

8. The bidirectional actuator according to claim 7,
wherein the electrically conductive reinforcing material comprises one or more electrically conductive reinforcing materials selected from the group consisting of carbon fiber, carbon black, graphene, carbon nanotubes, and carbon balls.

9. The bidirectional actuator according to claim 7,
wherein the polymer layer have an equivalent ratio calculated by the following Mathematical Formula 1, which is greater than 0.5 and less than 0.7: 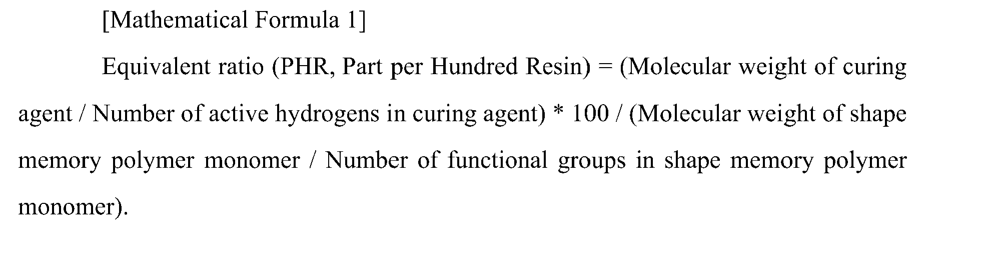 Equivalent ratio (PHR, Part per Hundred Resin) = (Molecular weight of curing agent / Number of active hydrogens in curing agent) * 100 / (Molecular weight of shape memory polymer monomer / Number of functional groups in shape memory polymer monomer).

10. The bidirectional actuator according to claim 1,
wherein the insulating layer comprises one or more insulating materials selected from the group consisting of polystyrene, polyimide, polyurethane, glass fiber, natural fiber, and Kevlar fiber.

11. The bidirectional actuator according to claim 1,
Wherein the bidirectional actuator undergoes bending deformation at temperatures equal to or higher than the austenite finish temperature (A_{f}) during heating, and
undergoes unfolding deformation at temperatures equal to or lower than the martensite finish temperature (M_{f}) during cooling.

12. A method for manufacturing a bidirectional actuator having curvature in the width direction, comprising the steps of:
preparing a metal layer comprising a shape memory alloy;
forming an insulating layer by laminating an insulating material on both sides of the metal layer; and
forming a polymer layer on one surface of the insulating layer opposite to the surface where the insulating layer and metal layer are in contact using a shape memory polymer composition.

13. The method for manufacturing a bidirectional actuator according to claim 12,
wherein the step of preparing a metal layer comprising a shape memory alloy comprises a step of fixing the shape memory alloy inside a cylindrical mold and performing heat treatment at a temperature of 500°C or less for a period of 10 minutes or more and 1 hour or less to prepare a metal layer having a permanent bent shape.

14. The method for manufacturing a bidirectional actuator according to claim 12,
wherein the forming a polymer layer on one surface of the insulating layer opposite to the surface where the insulating layer and metal layer are in contact using a shape memory polymer composition comprises a step of:
laminating an electrically conductive reinforcing material on the surface of the insulating layer opposite to the surface where the insulating layer and the metal layer are in contact; and
fixing the laminate of the metal layer, insulating layer, and conductive reinforcing material inside a mold having curvature in the width direction and impregnating it with the shape memory polymer composition.

15. The method for manufacturing a bidirectional actuator according to claim 12,
wherein the shape memory polymer composition comprises a shape memory polymer and a curing agent, and
the equivalent ratio calculated by the following Mathematical Formula 1 is more than 0.5 and less than 0.7: 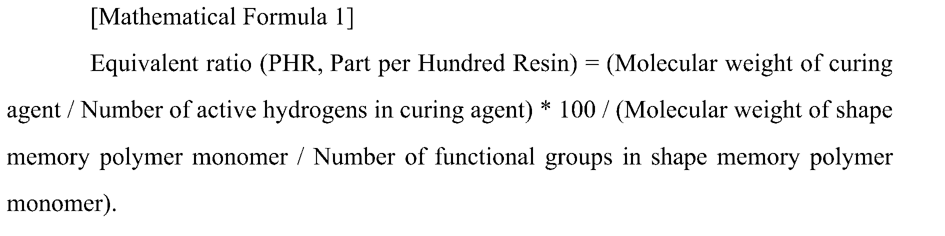 Equivalent ratio (PHR, Part per Hundred Resin) = (Molecular weight of curing agent / Number of active hydrogens in curing agent) * 100 / (Molecular weight of shape memory polymer monomer / Number of functional groups in shape memory polymer monomer).
